# EUROPEAN PATENT SPECIFICATION

(11) **EP 3 969 223 B1**
(45) Date of publication and mention of the grant of the patent: **14.10.2026**
(21) Application number: 20805226.6
(22) Date of filing: 12.05.2020
(51) Int. Cl.: B24B 9/14, B24D 11/00, G02C 13/00, B29D 11/00, G02C 7/04

(54) **METHOD OF REDUCING VOLUME VARIATION FOR TORIC SOFT CONTACT LENSES**
VERFAHREN ZUR REDUZIERUNG DER VOLUMENVARIATION FÜR TORISCHE WEICHE KONTAKTLINSEN
PROCÉDÉ DE RÉDUCTION DE VARIATION DE VOLUME POUR LENTILLES DE CONTACT TORIQUES SOUPLES

(30) Priority: 14.05.2019 US 201916411423
(43) Date of publication of application: 23.03.2022
(73) Proprietor: Johnson & Johnson Vision Care, Inc., Jacksonville, FL 32256 (US)
(72) Inventor: GERLIGAND, Pierre-Yves, Jacksonville, Florida 32256 (US); JUBIN, Philippe F., Jacksonville, Florida 32256 (US)
(74) Representative: Carpmaels & Ransford LLP
(86) International application number: PCT/IB2020/054493
(87) International publication number: WO 2020/230030

(56) References cited:
- EP-A1- 3 358 394
- EP-B1- 2 495 084
- EP-B1- 2 713 950
- WO-A1-2020/225622
- US-A1- 2011 166 652
- US-A1- 2015 146 171
- US-A1- 2017 108 709
- US-A1- 2017 108 709
- US-A1- 2017 146 822
- US-B1- 6 183 082

## Description

### BACKGROUND

Soft contact lenses, whether designed to provide simple vision correction, such as myopia or hyperopia, or more complex vision correction such as presbyopia, astigmatism or high order aberration correction, are based on the rules of refraction (Snell's law of refraction). The amount of correction may be determined from a combination of a back optic zone geometry, a front optic zone geometry, a center thickness, and a material refractive index. Generally, the geometry of a back surface of a lens remains the same across a stock keeping unit (SKU) range of lenses unless the lens is customized. The back surface, also called base curve, may determine fitting performance. Usually, more than one base curve is available for single vision lenses due to the limited number of SKUs to manage. Therefore, a practitioner may select a base curve that provides a best fit on a particular eye.

Lenses may be designed such that their mechanical performance remains independent from a prescribed vision correction to provide performance consistency across a SKU range. Provided that the required power is obtained by changing the geometry of a front surface, that change in geometry may introduce a variation in lens volume across the SKU range. For soft contact lenses that are rotationally symmetrical, variation in volume may range from 25% to 50% for SKUs ranging from -12.00D to +8.00D or within 20% to 45% for SKUs ranging from - 9.00D to +6.00D (the SKU range generally provided for most toric products). Usually, a sphere power range provided for a toric product is smaller than for a single vision lens due to a large number of SKUs to manage from multiple cylinder power and cylinder axis combinations. The largest volumes may be observed for extreme SKUs, such as high minus power lenses (lenses with sphere power below -6.0D) and high plus power lenses (lenses with sphere power above +6.0D). The smallest volumes occur for low power lenses, such as lenses around the plano sphere power.

A lens volume may be initially driven by lens material properties, and, more specifically, material stiffness. A lens made with a stiffer material may present the same stiffness properties with a thinner thickness profile as a lens with a softer material. Thus, a lens made with a stiff material might present less lens volume than a lens made with a soft material for the same SKU, base curve, and diameter combination. However, within the same SKU range, lenses made with a stiff material might present more volume variation than lenses made with a soft material. The lens volume also may be driven by a base curve and diameter combination. Lenses with larger diameter and stepper base curve may carry more volume.

Soft toric contact lenses may present less volume variation across an associated SKU range within a given cylinder correction. Thick zones for angularly stabilizing a lens on an eye may add material to the lens, whether stabilization zones are of a ballast type or dual stabilization zones. A change in geometry in an optic zone, for a given cylinder correction, represents a smaller change in volume compared to an overall lens volume, thus reducing overall volume variation. However, if different levels of cylinder correction are considered, and a cylinder may be provided from -0.50D to -2.50D in 0.50D step or from -0.75D to -2.75D in 0.50D step, then the variation in lens volume may drastically increase, similarly to what is seen in rotationally symmetrical lenses.

For many years, soft contact lenses have been used for the sole purpose of vision correction, such as correcting myopia, hyperopia, presbyopia, astigmatism correction or disease related vision loss requiring correction like keratoconus. Recently, use of soft contact lenses has been extended for other than vision correction purposes, such as beauty lenses (e.g., colored lenses), light filtering lenses (e.g., photochromic lenses, blue blocker lenses, etc.), or providing health benefits (e.g., allergy, dry eye, etc.).

Such diversities in the use of soft contact lenses may introduce new constraints in designs, and, more particularly, constraints related to lens volume, which may impact performance of the lenses. Soft toric contact lenses that are usually carrying larger volume than rotationally soft sphere contact lenses may not maintain their performance for such new uses.

Thus, there is a need for improvements.

EP2495084B1 describes a method for producing a plastic lens, wherein, in molding a plurality of plastic lenses having different optical surface shapes simultaneously in a single mold, by designing cavities such that each of the plastic lenses to be molded has the same volume, and an injection compression molding apparatus used for such method.

EP3358394A1 describes a contact lens having a first thick part and a second thick part provided on a peripheral zone at both left and right sides such that each center-of-gravity position of both the first thick part and the second thick part is positioned below a horizontal diametrical line. A third thick part is provided on the peripheral zone below an optical zone. An upper thin part and a lower thin part are provided respectively at an upper peripheral zone positioned above the optical zone and a lower peripheral zone positioned below the optical zone and at an outer circumference side of the third thick part.

EP2713950B1 describes a method for modifying the refractive index of an optical polymeric material. The method comprises continuously irradiating predetermined regions of an optical, polymeric material with femtosecond laser pulses to form a gradient index refractive structure within the material. An optical device includes an optical, polymeric lens material having an anterior surface and posterior surface and an optical axis intersecting the surfaces and at least one laser-modified, GRIN layer disposed between the anterior surface and the posterior surface and arranged along a first axis 45° to 90° to the optical axis and further characterized by a variation in index of refraction across at least one of at least a portion of the adjacent segments and along each segment.

US2017108709A1 describes a method, a system, and a computer program code for optimising geometry of at least one semi-finished ophthalmic lens in a set of semi-finished ophthalmic lenses having a designated lens material, each of the semi-finished ophthalmic lenses in the set having an initially determined geometry including one of a plurality of base curves determined to allow manufacture of finished ophthalmic lenses for ophthalmic lens prescriptions.

### SUMMARY

The method of the invention is as defined in claim 1.

### BRIEF DESCRIPTION OF THE DRAWINGS

The following drawings show generally, by way of example, but not by way of limitation, various examples discussed in the present disclosure. In the drawings:
Figure 1 illustrates an exemplary plot showing lens volume for a standard toric lens using an ASD type stabilization zone covering the -9.00D to +6.00D Rx range with cylinder correction varying from -0.75D to -2.75D.
Figures 2A-2C illustrate exemplary contour plots of a soft toric contact lens using dual stabilization zone as a mean to maintain angular orientation on eye.
Figure 3 illustrates an exemplary plot showing lens volume for a standard single vision lens covering the -12.00D to +8.00D Rx range.
Figure 4 illustrates an exemplary toric contact lens where the thickness profile along the vertical meridian is reduced when the prescribed cylinder is increased. The thickness profile along the horizontal meridian remains unchanged.
Figure 5 illustrates an exemplary plot showing volume for a toric lens designed such that the volume is independent of the amount of the prescribed cylinder.
Figure 7 illustrates an exemplary box plot representation of lens volume variation of the provided examples for the single vision and toric soft contact lenses.
Figure 8 illustrates an exemplary of single vision lenses where the volume variation has been reduced across the -12.0D to +8.0D SKU range.

### DETAILED DESCRIPTION

Described herein are systems and methods for manufacturing contact lenses. Utilizing the systems and/or methods described herein, a volume range of contact lenses may be maintained, regardless of a prescription strength of each contact lens. Each contact lens may comprise a front surface and a back surface. A first contact lens may comprise a first prescription strength, a first geometry associated with a first front surface, a first geometry associated with a first back surface, and a first volume. The first volume may be associated with a first material. The first contact lens may comprise the first material.

A second contact lens may comprise a second prescription strength, a second geometry associated with a second front surface, a second geometry associated with a second back surface, and a second volume. The second volume may be associated with a second material. The second contact lens may comprise the second material. The first prescription strength may be different from the second prescription strength. The second geometry associated with the second front surface may be altered from and based on the first geometry associated with the first front surface. The second geometry associated with the second back surface may be altered from and based on the first geometry associated with the first back surface. Altering the second geometry associated with the second front surface and/or the second geometry associated with the second back surface may comprise ensuring that the second volume is within a predetermined threshold range of the first volume.

An ophthalmic lens may comprise a first surface. The ophthalmic lens may comprise a soft contact lens. The ophthalmic lens may comprise a toric contact lens. The ophthalmic lens may comprise one or more silicone hydrogels. The ophthalmic lens may comprise one or more traditional hydrogels.

The ophthalmic lens may comprise a second surface disposed opposite the first surface and defining a volume of lens material therebetween.

The ophthalmic lens may exhibit a first cylinder power. A difference of the volume of lens material of the ophthalmic lens and a volume of lens material of a comparative lens may be minimized. The comparative lens may consist essentially of the same lens material as the ophthalmic lens and exhibit a second cylinder power different from the first cylinder power.

The difference of the volume of lens material of the ophthalmic lens and the volume of lens material of the comparative lens may be minimized by configuring a geometry of one or more of the first surface and the second surface based on at least the first cylinder power. The difference of the volume of lens material of the ophthalmic lens and the volume of lens material of the comparative lens may be minimized by configuring a geometry of the first surface based on a cylinder power associated with an optic zone of the second surface. The difference of the volume of lens material of the ophthalmic lens and the volume of lens material of the comparative lens may be minimized by configuring one or more of a lens diameter or a base curve of the ophthalmic lens based on at least the first cylinder power.

The difference of the volume of lens material of the ophthalmic lens and the volume of lens material of the comparative lens may be minimized by configuring one or more surface features. The one or more surface features may comprise one or more dimples. The difference of the volume of lens material of the ophthalmic lens and the volume of lens material of the comparative lens may be minimized by configuring one or more internal features. The one or more internal features may comprise one or more internal cavities.

The first cylinder power may comprise a diffractive cylinder power. The first cylinder power may comprise a refractive cylinder power.

A manufacturer may manufacture a first contact lens. The first contact lens may comprise a first cylinder power. The first contact lens may comprise a first front surface. The first front surface may comprise a first front surface geometry. The first contact lens may comprise a first back surface. The first back surface may comprise a first back surface geometry. The first contact lens may comprise a first material. The first material may comprise a first volume.

The manufacturer may manufacture a second contact lens. The second contact lens may comprise a second cylinder power. The second contact lens may comprise a second front surface. The second front surface may comprise a second front surface geometry. The second contact lens may comprise a second back surface. The second back surface may comprise a second back surface geometry. The second contact lens may comprise a second material. The second material may comprise a second volume. The first cylinder power may be different from the second cylinder power. The second front surface geometry and/or the second back surface geometry may be configured such that the second volume is within a predetermined threshold range of the first volume.

A first ophthalmic lens may be formed having a first front surface and a first back surface disposed opposite the first front surface and defining a first volume of lens material therebetween. A manufacturer may form a first ophthalmic lens having a first front surface and a first back surface disposed opposite the first front surface and defining a first volume of lens material therebetween. The first ophthalmic lens may exhibit a first cylinder power. The first cylinder power may be achieved by configuring a geometry of one or more of the first front surface and the first back surface. The first cylinder power may be achieved by configuring a geometry of the first front surface based on a cylinder power associated with an optic zone of the first back surface. The first cylinder power may be achieved by configuring one or more of a lens diameter or a base curve of the ophthalmic lens. The ophthalmic lens may comprise one or more silicone hydrogels. The ophthalmic lens may comprise one or more traditional hydrogels.

A second ophthalmic lens may be formed having a second front surface and a second back surface disposed opposite the second front surface and defining a second volume of lens material therebetween. The manufacturer may form a second ophthalmic lens having a second front surface and a second back surface disposed opposite the second front surface and defining a second volume of lens material therebetween. The second ophthalmic lens may exhibit a second cylinder power different from the first cylinder power.

One or more of the first cylinder power or the second cylinder power may comprise a diffractive cylinder power. One or more of the first cylinder power or the second cylinder power may comprise a refractive cylinder power. One or more of the first ophthalmic lens or the second ophthalmic lens may comprise a soft contact lens. One or more of the first ophthalmic lens or the second ophthalmic lens may comprise a toric contact lens.

The first ophthalmic lens and/or the second ophthalmic lens may comprise one or more surface features. The one or more surface features may comprise one or more dimples. The first ophthalmic lens and/or the second ophthalmic lens may comprise one or more internal features. The one or more internal features may comprise one or more internal cavities.

A difference between the first volume of lens material and the second volume of lens material may be independent of a difference between the first cylinder power and the second cylinder power.

A manufacturer may manufacture a first contact lens. The first contact lens may comprise a first cylinder power. The first contact lens may comprise a first front surface. The first front surface may comprise a first front surface geometry. The first contact lens may comprise a first back surface. The first back surface may comprise a first back surface geometry. The first contact lens may comprise a first material. The first material may comprise a first volume.

The manufacturer may manufacture a second contact lens. The second contact lens may comprise a second cylinder power. The second contact lens may comprise a second front surface. The second front surface may comprise a second front surface geometry. The second contact lens may comprise a second back surface. The second back surface may comprise a second back surface geometry. The second contact lens may comprise a second material. The second material may comprise a second volume. The first cylinder power may be different from the second cylinder power. The second front surface geometry and/or the second back surface geometry may be configured such that the second volume is within a predetermined threshold range of the first volume.

A first ophthalmic lens may be formed having a first front surface and a first back surface disposed opposite the first front surface and defining a first volume of lens material therebetween. A manufacturer may form a first ophthalmic lens having a first front surface and a first back surface disposed opposite the first front surface and defining a first volume of lens material therebetween. The first ophthalmic lens may exhibit a first cylinder power.

A second ophthalmic lens may be formed having a second front surface and a second back surface disposed opposite the second front surface and defining a second volume of lens material therebetween. The manufacturer may form a second ophthalmic lens having a second front surface and a second back surface disposed opposite the second front surface and defining a second volume of lens material therebetween. The second ophthalmic lens may exhibit a second cylinder power different from the first cylinder power.

One or more of the first cylinder power or the second cylinder power may comprise a diffractive cylinder power. One or more of the first cylinder power or the second cylinder power may comprise a refractive cylinder power. One or more of the first ophthalmic lens or the second ophthalmic lens may comprise a soft contact lens. One or more of the first ophthalmic lens or the second ophthalmic lens may comprise a toric contact lens. One or more of the first ophthalmic lens or the second ophthalmic lens may comprise one or more silicone hydrogels. One or more of the first ophthalmic lens or the second ophthalmic lens may comprise one or more traditional hydrogels.

A difference between the first volume of lens material and the second volume of lens material may be minimized. A difference between the first volume of lens material and the second volume of lens material may be minimized by configuring a geometry of one or more of the first front surface or the first back surface based on at least the first cylinder power and a geometry of one or more of the second front surface or the second back surface based on at least the second cylinder power. A difference between the first volume of lens material and the second volume of lens material may be minimized by configuring a geometry of the first front surface based on a cylinder power associated with an optic zone of the first back surface and a geometry of the second front surface based on a cylinder power associated with an optic zone of the second back surface.

A difference between the first volume of lens material and the second volume of lens material may be minimized by configuring one or more of a lens diameter or a base curve of the first ophthalmic lens based on at least the first cylinder power and the second ophthalmic lens based on at least the second cylinder power. A difference between the first volume of lens material and the second volume of lens material may be minimized by configuring one or more surface features associated with one or more of the first ophthalmic lens or the second ophthalmic lens. The one or more surface features may comprise one or more dimples. A difference between the first volume of lens material and the second volume of lens material may be minimized by configuring one or more internal features associated with one or more of the first ophthalmic lens or the second ophthalmic lens. The one or more internal features may comprise one or more internal cavities.

A manufacturer may manufacture a first contact lens. The first contact lens may comprise a first cylinder power. The first contact lens may comprise a first front surface. The first front surface may comprise a first front surface geometry. The first contact lens may comprise a first back surface. The first back surface may comprise a first back surface geometry. The first contact lens may comprise a first material. The first material may comprise a first volume.

The manufacturer may manufacture a second contact lens. The second contact lens may comprise a second cylinder power. The second contact lens may comprise a second front surface. The second front surface may comprise a second front surface geometry. The second contact lens may comprise a second back surface. The second back surface may comprise a second back surface geometry. The second contact lens may comprise a second material. The second material may comprise a second volume. The first cylinder power may be different from the second cylinder power. The second front surface geometry and/or the second back surface geometry may be configured such that the second volume is within a predetermined threshold range of the first volume.

Systems and methods are disclosed herein for designing soft contact lenses, for example, toric lenses, where lens volume material remains constant independently from an amount of prescribed cylinder built into the lens. Systems and methods are disclosed herein for providing a new soft contact lens with reduced volume variation compared to a standard soft contact lens.

As an example, a soft toric contact lens design is described with reduced volume variation compared to a standard soft toric contact lens design. The reduction of volume variation is achieved either by adjusting the geometry of the front surface across the proposed cylinder range, adjusting the geometry of the back surface according to the amount of prescribed cylinder, or a combination of both.

A contact lens may be defined by a front surface or surface power, a back surface or base curve and an edge. The front and back surface of the lens is described by at least three regions, the inner region from which the vision correction is obtained, the outer periphery of the lens that provides mechanical properties of the lens, and an intermediate region located between the inner region and the outer region used for blending the two aforementioned regions in a smooth manner such that discontinuities do not occur.

The optical zone is defined as the substantially central portion of the lens which contains the visual power correction for the wearer's ametropia and/or presbyopia. Ametropia is defined as the optical power needed to provide good visual acuity, generally at far distance. It is recognized that this would include myopia or hyperopia. Presbyopia is corrected by adding algebraically positive optical power to a portion of the optical zone to correct the wearer near visual acuity requirements. It is recognized that these optical powers may be created by refractive means, or diffractive means, or both. The power correction can also include astigmatism correction in combination with the previously mentioned vision corrections.

The peripheral zone provides stabilization of the lens on the eye including, centration and orientation. That region of the lens also provides the mechanical properties such as handling properties, related to ease of insertion and ease of removal, comfort and fit. The lens tightness on the eye drives either a loose fit which could lead to too much movement or a tight fit which could lead to not enough movement. Orientation stabilization is fundamental when the optical zone contains non-rotationally symmetric features, such as astigmatic correction and/or high order aberrations correction. The intermediate zone ensures that the optical zone and the peripheral zone are blended with tangent curves. It is important to note that both the optical zone and the peripheral zone can be designed independently, though sometimes their designs are strongly related when specific requirements are necessary. For example, the design of a toric lens with an astigmatic optical zone might require a peripheral zone for keeping the lens at a predetermined orientation on the eye.

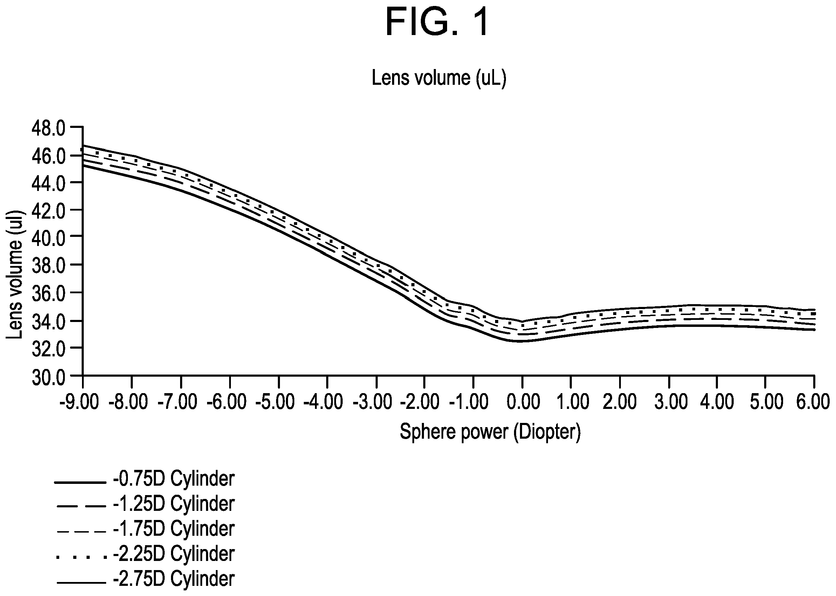

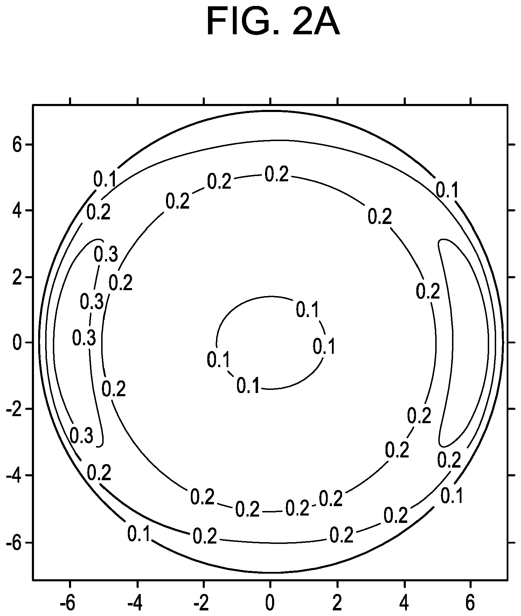

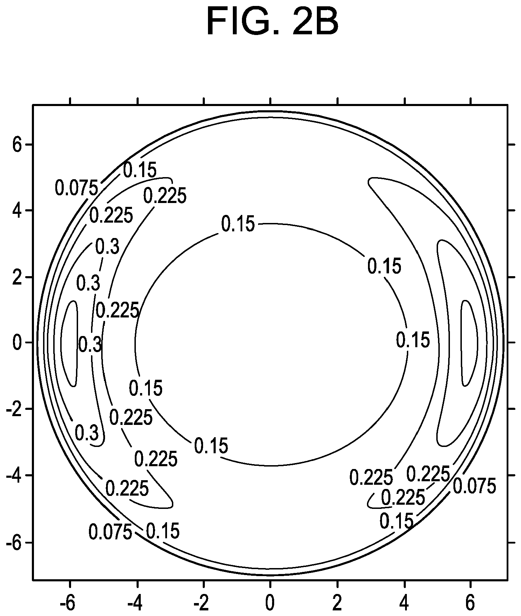

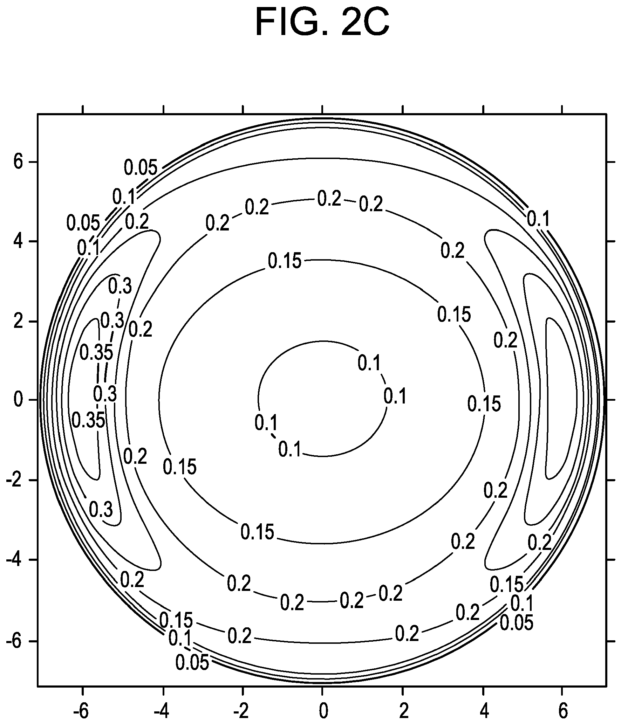

Generally, the astigmatism correction is built on the back surface side of a soft contact lens. The basic geometry of the back optic zone consists of a toric surface where the flattest radius in combination with the radius of the front surface provides the sphere power correction (sphere meridian), and the steepest radius of the back optic zone, oriented at 90 degrees from the flattest radius, provides the astigmatism correction (cylinder meridian). The amount of astigmatism corrected depends on the difference in curvature between the flattest and steepest meridian. Thus, for the same geometry of the front surface, higher level of astigmatism correction will require steeper radius of curvature along the cylinder meridian. The increase in curvature will result in an increase in volume for the same sphere power. The cylinder axis, obtained by setting the axis of the toric surface to the desired orientation according to the targeted prescription does not affect the volume of the lens. Fig. 1 illustrates an example of lens volume for a soft toric contact lens using a dual stabilization zone as a mean to maintain lens angular orientation on eye. The lens has a 14.30mm diameter and an equivalent base curve of 8.50mm. The maximum peripheral thickness in the stabilization zone region is about 0.375mm. The provided vision correction ranges from -9.00D to +6.00D every 0.25D for the sphere power and -0.75D to -2.75D for the cylinder with 0.50D increment. Figs. 2A-2C are contour plots of a soft toric contact lens (-3.00D / -0.75D @ 180deg.) using dual stabilization zone as a mean to maintain angular orientation on eye. In the provided example, even if the lens volume change does not exceed 4.5% for a given SKU across the provided astigmatism correction, the total volume variation within the full SKU range is about 44%.

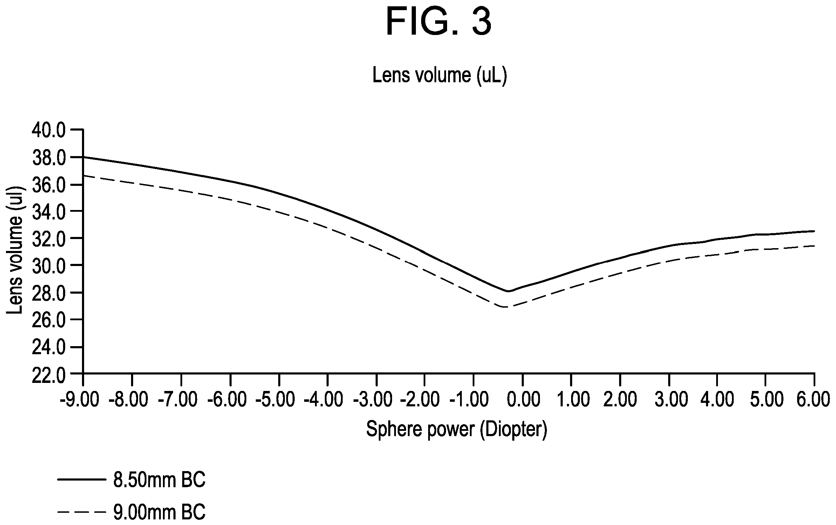

In comparison, Fig. 3 presents the volume of a single vision soft contact lens at two different base curves, 8.50mm and 9.00mm, for the same SKU range for the sphere power. The maximum peripheral thickness is about 0.215mm. The total volume variation within the full SKU range for the 8.50mm base curve and 9.00mm base curve is about 45% and 46% respectively.

In the provided examples the variation in volume is about the same magnitude between the toric lens and single vision lens. Lens volume is the result of the combination of multiple factors such as choice of material, base curve, diameter, center thickness, peripheral thickness geometry and so on. Thus, the volume itself and its variation across the targeted SKU range might differ from what is presented in the proposed examples. Those variations in volume can be detrimental to the product performance intent and/or its manufacturing process and more particularly for toric lenses where the addition of the astigmatic correction introduces an extra level of volume variation across the entire SKU range. Thus, reducing the volume variation will provide multiple benefits and more particularly for lenses where lens performance across SKUs is highly related to lens volume.

For example, if the lens manufacturing is based on molding, spin casting or other type of process sensitive to lens volume and/or volume variation then there is a benefit at reducing lens volume variation. Another benefit will be for lenses containing an active or inactive ingredient added to the monomer mix or to the packaging solution.

If the amount of active/inactive ingredient dispensed is related to the volume of the lens, then a design presenting less volume variation might also provide less complexity for manufacturing such lenses. Others benefits for such lenses include soft contact lenses where cosmetic appearance is a key criterion for that lens. Colored lenses and photochromic lenses are examples of such lenses. Also lenses where material properties such as absorbance is critical to performance will benefit of the proposed solution.

In a first exemplary embodiment according to the claimed invention, the reduction of the volume variation is achieved by adjusting the front surface geometry according to the amount of cylinder prescribed on the back surface optic zone. Because toric lenses require angular stability, changes on the front surface of the lens must be done without impacting such aspect of the lens. Toric lenses with higher astigmatism correction also require better angular stability and angular repeatability than toric lenses with lower astigmatism correction. Subjects with a large amount of astigmatism are more sensitive to lens angular misalignment than subjects with less astigmatism for the same angular misalignment. Thus, the design changes on the front surface are preferably done such that the angular stability and angular repeatability are improved the larger the prescribed cylinder is.

Angular stability relates to how much angular variation the lens has when worn by the subject once the lens reached its final angular resting position. The smaller the angular variations are the better the angular stability of the lens is.

Angular repeatability relates to how much angular variation the lens has for its angular resting position. The more consistent the angular resting position is between subjects or within the same subject the better the angular repeatability of the lens is.

In a first example according to the claimed invention, the toric lens is a dual stabilization zones type design. The volume variation related to the prescribed cylinder are eliminated by means of varying the peripheral thickness along the 90 degree meridian to cancel out the volume change induced by the change in the geometry of the back surface adjusted according to the amount of prescribed cylinder power. In the proposed example the thickness profile along the 0 degree meridian of the peripheral region remains unchanged across the SKUs. Thus, the maximum thickness along that meridian is kept constant across the SKUs. The thickness profile along the 90 degree meridian in the peripheral region is adjusted according to the amount of prescribed cylinder power such that the induced volume change, coming from the back surface, is compensated by changing the profile of the front surface along the 90 degree meridian. The adjustment of the geometry of that meridian drives the overall angular thickness change along these two meridians.

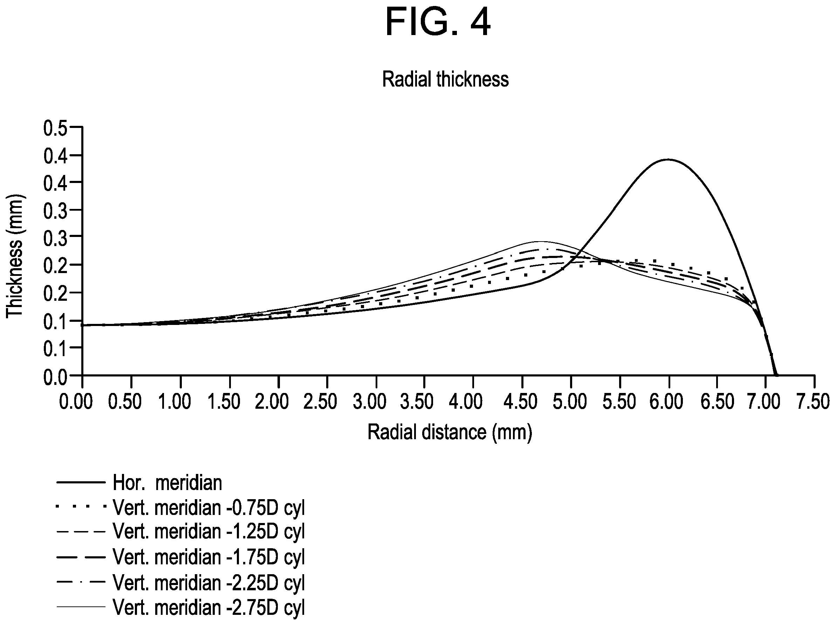

If we define the thickness differential as the difference in thickness between the maximum thickness in the peripheral region along the 0 degree meridian and the thickness at the same radial location along the 90 degree meridian, then in the proposed example the thickness differential will increase with the increase of the prescribed cylinder power. It is known that large thickness differential provides better rotation performance and stability than small thickness differential for dual stabilization zone type design. Thus, improving angular stability and angular repeatability for larger prescribed cylinder is achieved. Fig. 4 depicts the thickness profiles of such lens where the thickness along the vertical meridian is reduced while the prescribed cylinder is increased. The cylinder axis is along the 90 degree meridian.

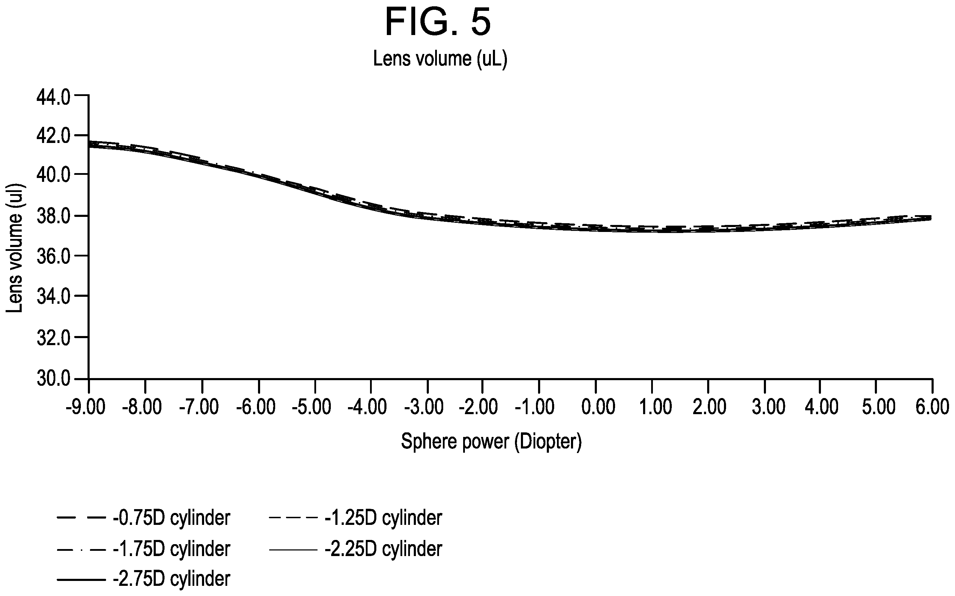

Fig. 5 depicts the resulting lens volume achieve using the proposed approach. The volume change is independent of the amount of prescribed cylinder. The variation in volume is only driven by the change in sphere power correction. The volume variation in percent is about 11%. Further reduction in volume variation can be obtained by adjusting other parameters driving the geometry of the front surface such as center thickness, front optic zone diameter, or thickness at the edge of the front optic zone.

Similar outcome can be obtained by changing the maximum thickness while keeping constant the thickness profile along the vertical meridian. This solution also provides larger thickness differentials for larger prescribed cylinders. Another option is to change both the maximum thickness along the horizontal meridian and the thickness profile along the vertical meridian such that the thickness profile increases with an increase of the prescribed cylinder.

The same principle can be applied on toric soft contact lenses for which the angular stability and angular repeatability is achieved using a different approach.

Other criteria can also be considered during the lens design process such as lens inversion, lens folding, lens wrapping usually evaluated through FEA modeling. Such criteria, related to the lens mechanical performance, can also be included during the process of optimizing the geometry of the front surface according to the desired lens performance.

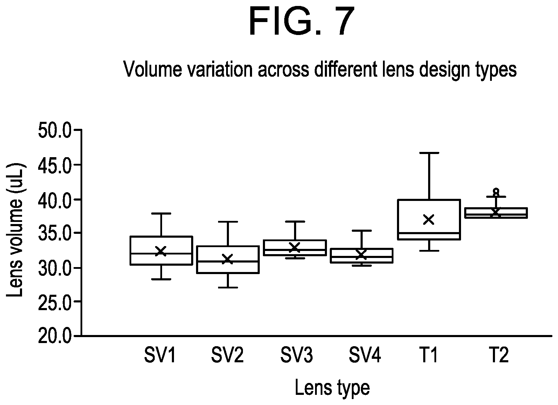

Fig. 7 is a box plot summarizing the volume variations across the same SKU range (-9.00D to +6.00D) for different types of contact lenses. Volume data labeled as SV1 and SV2 refers to the previously mentioned single vision lenses with respective base curve radius of 8.50mm (SV1) and 9.00mm (SV2). Lenses labeled as SV3 (8.50mm BC) and SV4 (9.00mm BC) are single lenses with reduced volume variation of the previously mentioned example. T1 corresponds to the soft toric contact lens using a dual stabilization zone of Fig. 1, and T2 corresponds to the soft toric contact lens designed based on the first proposed approach for reducing volume variation.

This principle can be applied on toric soft contact lenses for which the angular stability and angular repeatability is achieved using a different approach.

Other criteria can also be considered during the lens design process such as lens inversion, lens folding, lens wrapping usually evaluated through FEA modeling. Such criteria, related to the lens mechanical performance, can also be included during the process of optimizing the geometry of the back surface according to the desired lens performance.

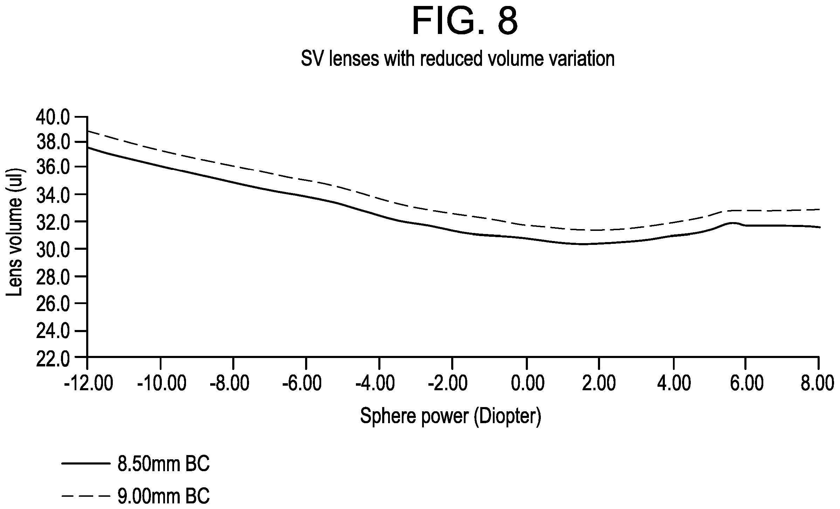

Fig. 8 presents the volume of a single vision soft contact lens at two different base curves, 8.50mm and 9.00mm sharing the same basic geometrical characteristics (base curve geometry, optic zone diameter, lens diameter) as the single vision lenses of Fig. 3. The center thickness and peripheral thickness were adjusted to reduce the volume variation. The volume variation within the full SKU range (-12.0D to +8.00D) for the 8.50mm base curve and 9.00mm base curve is about 26% and 24% respectively. This corresponds to a reduction of 43% and 48% respectively compared to the original volume data provided in Fig. 3.

Other driving parameters beside center thickness and peripheral thickness can be adjusted to reduce the volume variation such as the optic zone diameter. The choice of the parameters will depend on the targeted performance and the use of the contact lens.

Although it may be desirable to have the same base curve / diameter combination across the SKU range, a change in one or both of those parameters can be applied to remove the volume variation induced by the prescribed cylinder. For example, the lens diameter can be reduced with the increase of the prescribed cylinder, or the diameter can be increased for low cylinder powers and reduced for large cylinder powers if the nominal diameter is set in the middle of the cylinder range. A similar strategy can be used with the base curve. For example, the base curve can be flattened with the increase of the prescribed cylinder power , or base curve can be steepened for low cylinder powers and flattened for large cylinder powers if the nominal base curve is set in the middle of the cylinder range.

Although shown and described in what is believed to be the most practical and preferred embodiments, it is apparent that departures from specific methods described and shown will suggest themselves to those skilled in the art and may be used without departing from the scope of the invention, which is set out in the appended claims. The present invention is not restricted to the particular constructions described and illustrated but should be constructed to cohere with all modifications that may fall within the scope of the appended claims.

## Claims

1. A method of reducing volume variation for toric soft contact lenses, comprising:
(i) providing a toric soft contact lens comprising:
a front surface; and
a back surface disposed opposite the front surface and defining a volume of lens material therebetween;
wherein the toric soft contact lens is a dual stabilization zones type design;
wherein the toric soft contact lens exhibits a first cylinder power;
(ii) minimizing a difference of the volume of lens material of the toric soft contact lens and a volume of lens material of a comparative toric soft contact lens by configuring a geometry of the front surface based on a cylinder power associated with an optic zone of the back surface;
wherein the volume variation related to a prescribed cylinder power is eliminated by means of varying the peripheral thickness along a 90 degree meridian to cancel out the volume change induced by the change in the geometry of the back surface adjusted according to the amount of prescribed cylinder power;
wherein the comparative toric soft contact lens consists essentially of the same lens material as the toric soft contact lens and exhibits a second cylinder power different from the first cylinder power.

2. The method of claim 1, wherein the first cylinder power comprises a refractive cylinder power.

## Patentansprüche

1. Verfahren zum Verringern einer Volumenvariation für torische weiche Kontaktlinsen, umfassend:
(i) Bereitstellen einer torischen weichen Kontaktlinse, umfassend:
eine vordere Oberfläche; und
eine hintere Oberfläche, die gegenüber der vorderen Oberfläche angeordnet ist und ein Volumen aus Linsenmaterial dazwischen definiert;
wobei die torische weiche Kontaktlinse ein Design einer Art mit dualen Stabilisierungszonen ist;
wobei die torische weiche Kontaktlinse eine erste Zylinderkraft vorweist;
(ii) Minimieren eines Unterschieds des Volumens aus Linsenmaterial der torischen weichen Kontaktlinse und eines Volumens aus Linsenmaterial einer vergleichenden torischen weichen Kontaktlinse durch ein Konfigurieren einer Geometrie der vorderen Oberfläche basierend auf einer Zylinderkraft, die mit einer optischen Zone der hinteren Oberfläche verknüpft ist;
wobei die Volumenvariationen, die sich auf eine verordnete Zylinderkraft bezieht, mittels eines Variierens der peripheren Dicke entlang eines 90-Grad-Meridians eliminiert wird, um die Volumenänderung aufzuheben, die durch die Änderung in der Geometrie der hinteren Oberfläche induziert wird, die gemäß der Menge an verordneter Zylinderkraft angepasst ist;
wobei die vergleichende torische weiche Kontaktlinse im Wesentlichen aus dem gleichen Linsenmaterial wie die torische weiche Kontaktlinse besteht und eine zweite Zylinderkraft vorweist, die sich von der ersten Zylinderkraft unterscheidet.

2. Verfahren nach Anspruch 1, wobei die erste Zylinderkraft eine refraktive Zylinderkraft umfasst.

## Revendications

1. Procédé de réduction de la variation de volume pour des lentilles de contact souples toriques, comprenant :
(i) la fourniture d'une lentille de contact souple torique comprenant :
une surface avant ; et
une surface arrière disposée à l'opposé de la surface avant et définissant un volume de matériau de lentille entre elles ;
dans lequel la lentille de contact souple torique est une conception de type à doubles zones de stabilisation ;
dans lequel la lentille de contact souple torique présente une première puissance cylindrique ;
(ii) la minimisation d'une différence entre le volume de matériau de lentille de la lentille de contact souple torique et un volume de matériau de lentille d'une lentille de contact souple torique comparative en configurant une géométrie de la surface avant sur la base d'une puissance cylindrique associée à une zone optique de la surface arrière ;
dans lequel la variation de volume liée à une puissance cylindrique prescrite est éliminée en faisant varier l'épaisseur périphérique le long d'un méridien à 90 degrés pour faire s'annuler le changement de volume induit par le changement de géométrie de la surface arrière ajustée en fonction de la quantité de puissance cylindrique prescrite ;
dans lequel la lentille de contact souple torique comparative est constituée essentiellement du même matériau de lentille que la lentille de contact souple torique et présente une seconde puissance cylindrique différente de la première puissance cylindrique.

2. Procédé selon la revendication 1, dans lequel la première puissance cylindrique comprend une puissance cylindrique de réfraction.
